# EUROPEAN PATENT APPLICATION

(11) **EP 1 122 636 A2**
(43) Date of publication of application: **08.08.2001**
(21) Application number: 01300963.4
(22) Date of filing: 02.02.2001
(51) Int. Cl.: G06F 3/16

(54) **System and method for analysis, description and voice-driven interactive input to html forms**

(30) Priority: 03.02.2000 US 496768
(71) Applicant: SIEMENS CORPORATE RESEARCH, INC., Princeton, New Jersey 08540 (US)
(72) Inventor: Goose, Stuart, Princeton, NJ 08542 (US); Newman, Mike, New Hope, PA 18938 (US); Su, Wei-Kwan Vincent, Princeton, NJ 08540 (US)
(74) Representative: O'Connell, David Christopher

(57) **Abstract**

A method for analyzing and describing structured documents for audibly rendering forms for user interaction, in accordance with the present invention, includes presenting a structured document and analyzing the structured document to identify the presence of at least one form (Block 102). The form includes at least one input element. The input elements are marked with descriptive tags (Blocks 104-130), and the descriptive tags are audibly presented to a user to enable the user to make selections and enter data for the input elements in the form (Block 132).

## Description

### BACKGROUND

### 1. Technical Field

This disclosure relates to audibly rendering forms and more particularly, to a method and system for rendering forms over the Internet.

### 2. Description of the Related Art

The World Wide Web (WWW) has enjoyed phenomenal growth over recent years and now accounts for a significant proportion of all Internet traffic. The unmitigated success of the WWW bears testimony to the previously unsatisfied need for a system able to integrate and deliver distributed information. The profile of hypermedia has been raised significantly by the WWW, which has endorsed hypermedia as an appropriate technology for accessing and navigating information spaces. Users can access a wealth of information and associated services over the WWW, ranging from international news to local restaurant menus.

Interactive voice browsers that make extensive use of speech synthesis and recognition offer an alternative paradigm that enables both sighted and visually impaired users to access the WWW. Interactive voice browsers' afford ubiquitous mobile access to the WWW using a wide range of consumer devices in addition to the desktop PC. As such, interactive voice browsers can facilitate a safe, "hands-free" browsing environment, which is of importance to categories of users such as car drivers and various mobile and technical professionals.

The Hypertext Markup Language (HTML) has long specified the ability for users to enter information into an HTML form and, when completed, for the WWW browser to submit this information across the Internet to the originating WWW server. Voice browsers have not provided the support for processing, rendering and facilitating the interactive input of information into HTML forms.

Therefore, a need exists for a system and method for analyzing an HTML form document and voice browser extensions needed to support both DTMF (Digital Tone Multiple Frequency) and speech driven interactive input of information in this environment.

### SUMMARY OF THE INVENTION

A method for analyzing and describing structured documents for audibly rendering forms for user interaction, in accordance with the present invention, includes presenting a structured document and analyzing the structured document to identify the presence of at least one form. The form includes at least one input element. The input elements are marked with descriptive tags, and the descriptive tags are audibly presented to a user to enable the user to make selections and enter data for the input elements in the form.

A method for analyzing and describing structured documents on the Internet for audibly rendering forms for user interaction includes the steps of downloading a structured document from the Internet, analyzing the structured document to identify the presence of at least one form, the at least one form including input elements, marking the input elements with descriptive tags, audibly presenting the descriptive tags to a user to enable the user to make selections and enter data for the input elements in the form, associating a user response to a particular input selection or data entry value to provide input for the input elements of the form and submitting the form in a completed state.

In other methods, the step of presenting a structured document may include the step of presenting a hypertext markup language document. The step of marking the elements with descriptive tags may include the steps of, if an input element is found, labeling the input element and describing the input element in accordance with text associated with the input element in the form. The input elements may include one or more of a select list, a radio button, a check box, a text area, and a button. The step of describing the input element in accordance with text associated with the input element in the form may include the step of describing the input element in accordance with text associated with the input element in accordance with criteria for determining the associated text. The criteria may include a most likely placement position for the associated text. The step of audibly presenting the descriptive tags to a user may includes the step of audibly presenting the descriptive tags by employing a voice synthesizer to audibly render the descriptive tags in a context of the form.

In still other methods, the step of audibly presenting the descriptive tags to a user may include the step of audibly presenting the descriptive tags by employing a voice synthesizer to audibly render the descriptive tags in a context of the form. The user response may include speech and the step of associating a user response to a particular input selection or data entry value includes the step of associating user speech with a particular input selection or data entry value. The user response may include a digital tone multiple frequency (DTMF) signal and the step of associating a user response to a particular input selection or data entry value may include the step of associating a DTMF signal with a particular input selection or data entry value.

The methods of the present invention may be implemented by a program storage device readable by machine, tangibly embodying a program of instructions executable by the machine to perform the method steps described.

These and other objects, features and advantages of the present invention will become apparent from the following detailed description of illustrative embodiments thereof, which is to be read in connection with the accompanying drawings.

### BRIEF DESCRIPTION OF DRAWINGS

This disclosure will present in detail the following description of preferred embodiments with reference to the following figures wherein:
FIG. 1 is depicts HTML code for input elements for use in accordance with the present invention;
FIG. 2 is an illustrative form generated in accordance with the HTML code of FIG. 1;
FIG. 3 is a block/flow diagram showing a system/method for analyzing a structured document to describe a form and its input elements in accordance with the present invention;
FIG. 4 is a block/flow diagram for identifying labels for ambiguously labeled input elements in accordance with the present invention;
FIG. 5 depicts a form having a plurality of input elements and illustratively demonstrating one method for choosing a most likely position for a label associated with an ambiguously labeled element in accordance with the present invention;
FIG. 6 is a block diagram showing a system for analyzing, describing and audibly rendering structured documents in accordance with the present invention;
FIG. 7 is a block/flow diagram showing a system/method for analyzing and interfacing with a voice browser in accordance with the present invention; and
FIG. 8 illustratively depicts a telephone keypad for entering alphanumeric information to a voice browser.

### DETAILED DESCRIPTION OF PREFERRED EMBODIMENTS

The present invention provides a system and method for analyzing an HTML form document and voice browser extensions needed to support both DTMF (Digital Tone Multiple Frequency) and speech driven interactive input of information in this environment. Such interactive support for HTML form input affords a user mobile access to a variety of electronic commerce WWW services such as financial services, on-line purchasing, arranging travel, route finding, etc. over a network, such as the Internet.

Interactive voice browsing, in accordance with the invention, enables both sighted and visually impaired users to access the WWW. Interactive voice browsers' afford ubiquitous mobile access to the WWW using a wide range of consumer devices in addition to the desktop PC. As such, interactive voice browsers can facilitate a safe, "hands-free" browsing environment, which is of importance to categories of users such as car drivers and various mobile and technical professionals.

A hypertext markup language (HTML) form is a section of an HTML document that may include normal content, markup, special elements called controls and labels that provide functional descriptions of those controls. The controls include graphical user interface dialog elements or input elements including check boxes, radio buttons, list boxes, text fields and buttons. Users can complete an HTML form by modifying its controls (e.g., entering text into a text field, selecting an item from a list box, etc.), before submitting the form to an agent for processing (e.g., to a Web server, to a mail server, etc.)

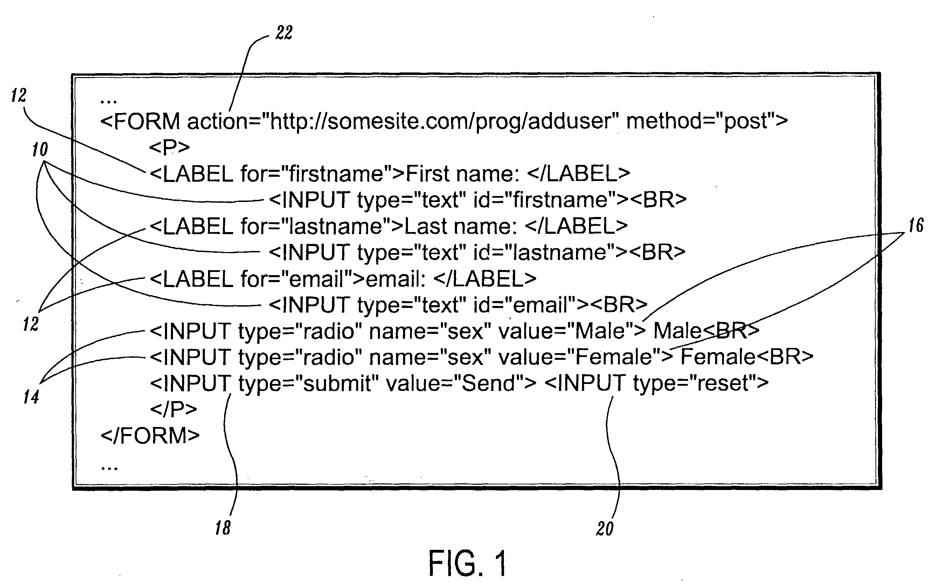

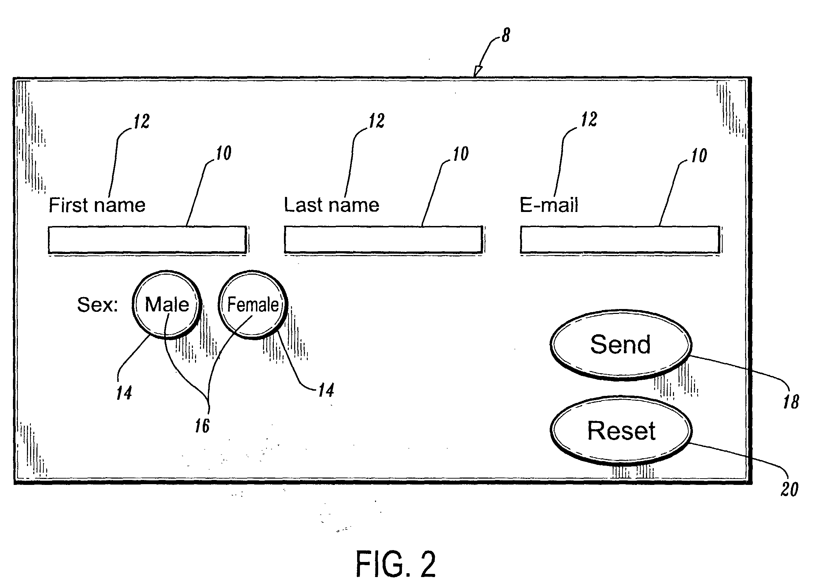

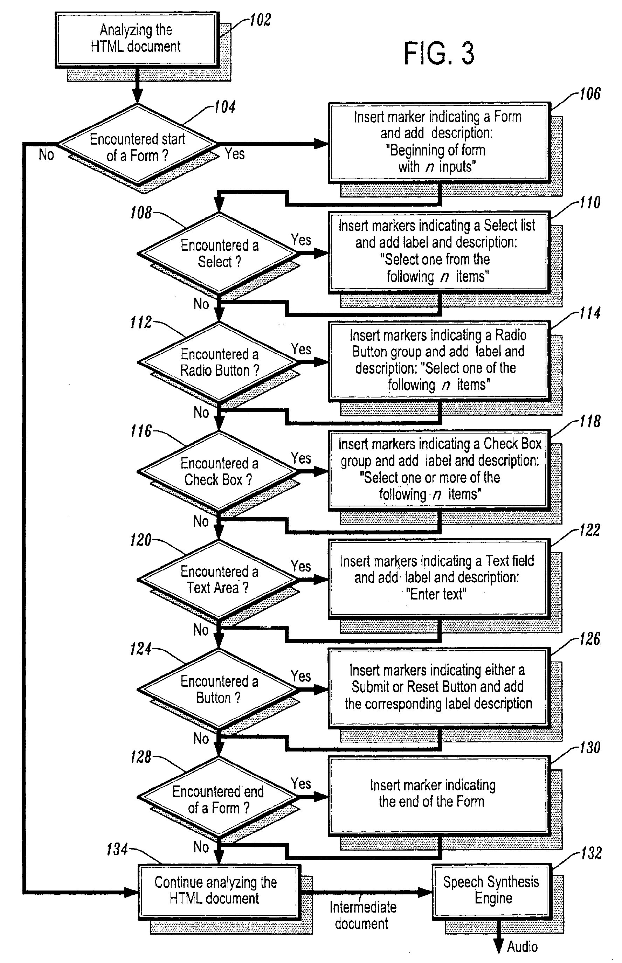

It should be understood that the elements shown in FIGS. 1-6 may be implemented in various forms of hardware, software or combinations thereof. Preferably, these elements are implemented in software on one or more appropriately programmed general purpose digital computers having a processor and memory and input/output interfaces.

Referring now in specific detail to the drawings in which like reference numerals identify similar or identical elements throughout the several views, and initially to FIGS. 1 and 2, a form 8 including HTML code is illustratively shown to demonstrate aspects of the present invention. A visual WWW browser will download, parse and interpret the portion of HTML in FIG. 1 and present the form 8 as a collection of graphical user interface dialog elements (FIG. 2). The HTML in FIG. 1 declares three text fields 10 and their associated descriptive labels 12, two radio buttons 14 and accompanying textual descriptions 16, and submit button 18 and reset button 20. Upon completion of the form 8, the user presses the submit button 18 and the browser collects the input information and sends it to the WWW server specified by the URL in a FORM action field 22.

Once the HTML parser has read the HTML document into an internal data structure, a voice browser, such as one described in a commonly assigned, copending application, serial number 08/768,046, filed December 13, 1996 and incorporated herein by reference, then applies an analytical method to elicit both the structure and context of the document. An illustrative analytical method in accordance with the present invention is described in FIG. 3.

Referring to FIG.3, a method for analyzing an HTML document to elicit both the structure and context of the document and apply the structure and content to a voice browser is described for the present invention. In block 102, an HTML document is analyzed for other features or structures, for example, sections, segments and tags for use with other applications. In block 104, it is determined whether a form has been encountered. If a form has not been encountered, the method goes to block 134 to continue analyzing the document for forms on other pages or for other context or structure for other applications. If a form has been encountered, in block 106, a marker is inserted to indicate the start of a form along with a description of the form, for example, "beginning of form with n inputs." In block 108, if a select list is encountered, a marker is inserted indicating a select list, and a label and description are added in block 110, for example, "select one form the following n items."

In block 112, it is determined if a radio button is encountered. If so, a marker is inserted indicating a radio button and a description and label are added in block 114. In one example, the label and description may include: "select one of the following n items." In block 116, a determination is made as to whether a check box has been encountered. If a check box has been encountered, a marker indicating a check box is inserted and a label and description are added in block 118, for example, "select one or more of the following n items." If a text area is found in block 120, a marker and description/label are added, in block 122. For example, the description/label may include "Enter text." If a button or other virtual device is found in block 124, an appropriate marker and description/label are added, in block 126. For example, the button may include a submit or reset button or other button or device, such as, for example, a dial, a switch or a sliding control.

When the end of a form is encountered in block 128, a marker is inserted indicating the end of the form in block 130. If the decision blocks 108, 112, 116, 120, 124 or 128 include a negative (i.e., no) response, the flow path is simply passed to the next decision block (or to block 134 for decision block 128). In block 134, other analysis of the HTML document is performed. The output of the method of FIG. 3 is an intermediate document that can be interpreted by a speech synthesis engine 132, for example, a Microsoft SAPI compliant speech synthesis engine. This produces the meta-information, in the form of commands, which will cause the speech synthesis engine to vary its voice, tone, rate and other parameters to convey the information within the HTML document. This also determines which text will be announced to the user. The markers and descriptions may be varied according to the forms, text, buttons etc. encountered in the document. The method of FIG. 3 may be extended to encompass other elements of HTML forms as well.

An HTML form may specify the default settings for each of the dialog elements present. In one embodiment, these default settings may be specified by a user to individually tailor labels of descriptions to particular needs of the user. These default settings are respected and included by the analytical method.

A particular failing of the conventional HTML specification with regard to forms lies with the inability to label the form elements unambiguously. For the user to provide sensible input for a specific element field, the user first has to comprehend the meaning of the field. This role is served by an associated textual label, which usually provides the adequate context. Unfortunately, not every HTML form element has an associated tag parameter for a descriptive label.

This incompleteness of the HTML specification forces authors to juxtapose descriptive text labels with the HTML form elements in an ad-hoc fashion. Many authors strive to design aesthetic and intuitive graphical HTML pages. To achieve this goal some authors purposefully select alternative HTML constructs to fashion a custom graphical view of the structure of the page, as opposed to employing the HTML constructs originally designated for specifying the logical structure.

As a result, it is a non-trivial task to determine which HTML form elements are associated with which user-added labels. It is not uncommon for an HTML table to be employed to structure the visual layout of the HTML form. As such, it is possible for the descriptive label for an HTML form element to occupy any one of the surrounding eight cells in the table. Thus, the task of label detection and association is neither easy nor an exact science.

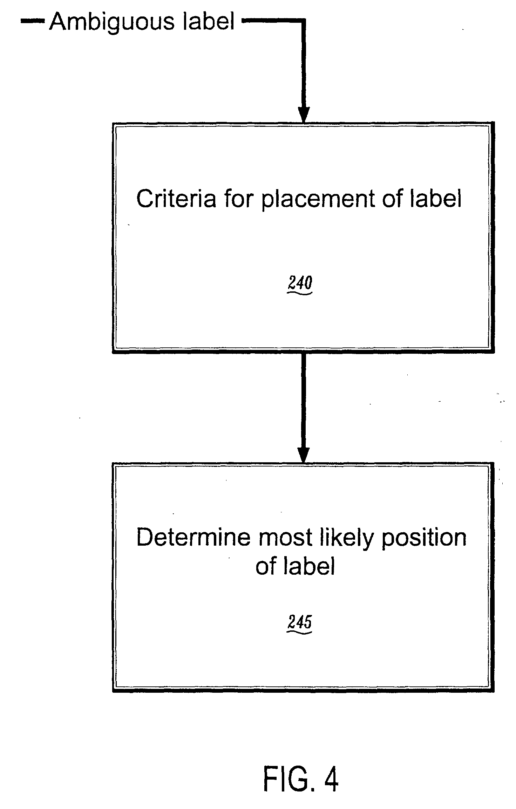

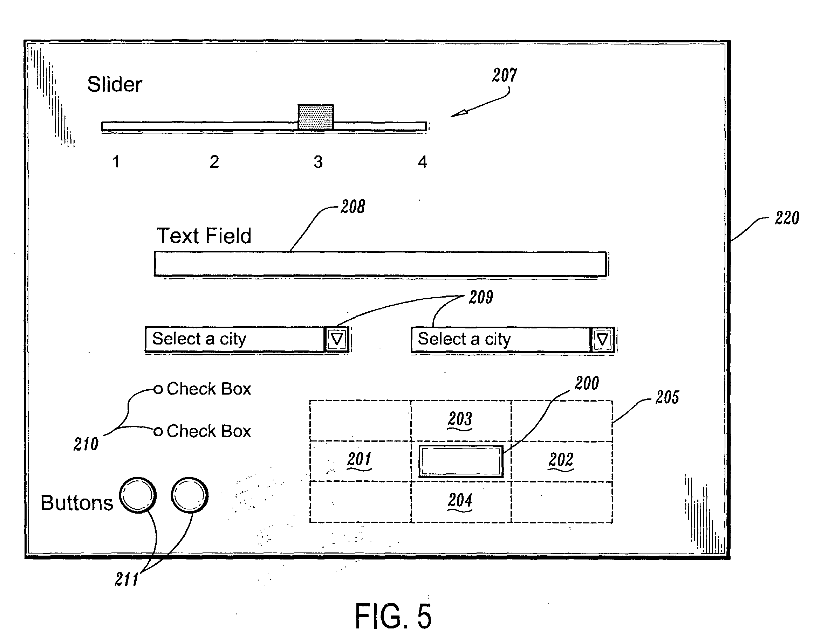

Referring to FIGS. 4 and 5, the present invention employs an algorithm that examines the area surrounding (table 205) each HTML form element 200. In the event that an ambiguous label is encountered for a control in the method of FIG. 3, the method of FIG. 4 is invoked. In one illustrative embodiment, criteria are set for analyzing the surrounding area for each HTML form element, in block 240. For example, with reference to a form 220 in FIG. 5, the criteria may include:

If element 200 is a text field, it is most likely to be described by a textual label to the left. If within a table 205 (shown in phantom lines) and no label is present at position 201, then position 203 is next most likely to be correct. If element 200 is a radio button, it is most likely to be described by a textual label to the right, e.g., position 202. If element 200 is a check box, it is most likely to be described by a textual label to the right, e.g., position 202.

The labels are then detected in the most likely position for that type of HTML element, in block 245, in accordance with the criteria. This label detection method works adequately for the majority of HTML forms. FIG. 5 also shows other input or control elements which may be employed with the present invention. These include but are not limited to sliders 207, text fields 208, select lists 209, check boxes 210, buttons 211 including radio buttons, etc.

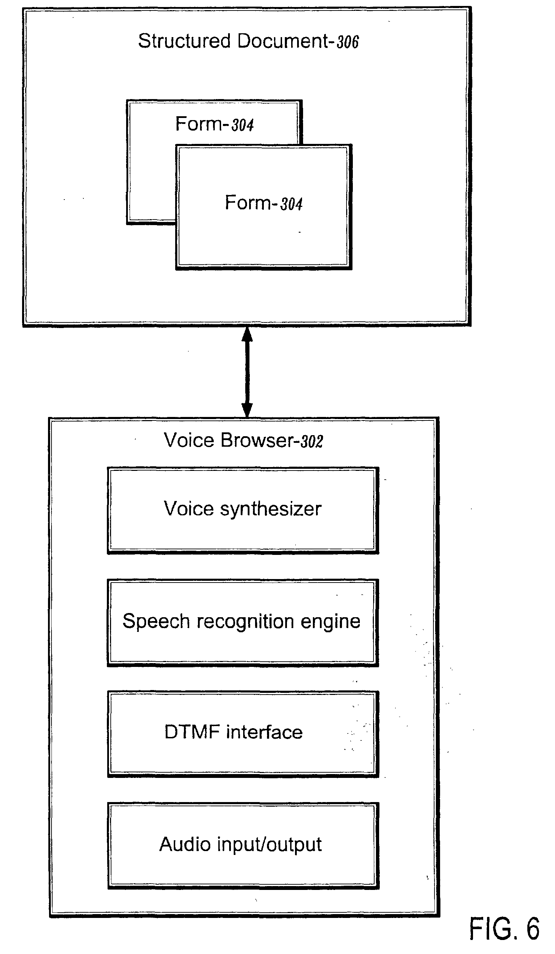

Referring to FIG. 6, a system for analyzing and rendering HTML forms is illustratively shown. An interactive voice browser 302 may employ a wide range of consumer devices for example, a portable communications device, such as a telephone, a personal digital assistant, a computer, a radio, etc. Voice browser 302 includes a program storage device(s), which may include one or more of a voice synthesizer, and a speech recognition engine. Voice browser 302 may also include input/output devices such as, a microphone and a speaker for the input and the output of audio. A DTMF interface is also included on voice browser 302 for receiving and interpreting DTMF signals from a telephone device.

In a preferred embodiment, user interaction via a telephone can be facilitated through "command and control" speech recognition and/or out-of-band (or in-band) digital tone multiple frequencies (DTMF) generated by keypad depressions. To support the interactive selection and input of alphanumeric information into HTML forms 304, voice browser 302 supports either or both of these input methods.

An HTML document 306 may include zero or more HTML forms 304. Document 206 may be downloaded from a network, such as the Internet or may be stored on voice browser 302. Document 306 preferably includes an HTML document; however, other structured documents may be employed as well. For example, structural documents may include but are not limited to XML, LaTex™, RTF, HDML and/or SGML. By structured documents, it is meant that the document's content and structural information are mixed freely and that all of the documents to be rendered need not have a same or even similar structure. The present invention may be employed with arbitrary types of documents including JAVA™ programs or non-text media, for example, audio streams, audio files, etc.

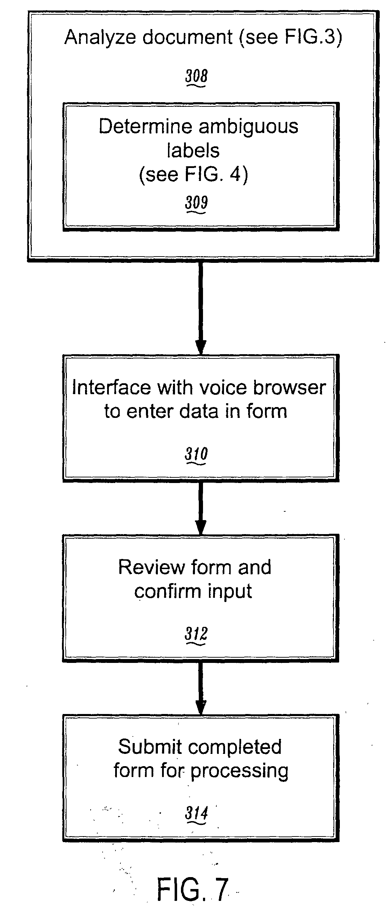

Referring to FIG. 7 with continued reference to FIG. 6, during analysis of document 306 in block 308, the method of FIG. 3 is employed. Voice browser 302 informs the user and offers the user the option of skipping past the entire form in block 306. When a form 304 is encountered with an ambiguous label for a control element, the method of FIG. 4 is invoked in block 309.

If the user chooses to listen and interact with the voice browser to complete the form then the following describes the speech-driven and/or DTMF interaction of one manifestation of this technology. In block 310, user interaction with voice browser 302 is performed. Voice browser 302 may include the system described in application serial number 08/768,046, filed December 13, 1996 previously incorporated herein by reference, although other audio browsers may be employed. In one example, an HTML form selection, or list box, may be supported. The voice browser 302 announces that a list with *n* items has been encountered and that the user must select one item. Each entry in the list is assigned a unique number. The voice browser 302 then reads out this number and the corresponding text item in the list. The corresponding text, labels or description have previously been associated with the selection box or other form elements in the-analysis step in block 308.

In preferred embodiments, at any stage the user can interrupt the list enumeration by either speaking the number or entering the number on the keypad which may be followed by a sentinel (e.g., #). When input is received, the voice browser 302 recites the selection and then requests a confirmation of this selection from the user. If the user accepts, the voice browser 302 issues a confirmation of the selection and moves to the next HTML form element. If the user declines, the voice browser continues to enumerate the list from this point onwards. Hence, this mechanism facilitates random access into the list.

It is also possible to populate a speech recognition grammar with the text of every item in the list. This permits the user to interrupt the list enumeration by speaking the item. The recognition accuracy of speech recognition engines is proportional to the size of the grammar. Hence, a large list equates to a large grammar, which may imply a lower recognition rate.

Many HTML forms have numerical content to represent dates, such as days of the month, months of the year, etc. Rather than announcing the numerical index "1" followed by the first day of the month "1", the voice browser only announces "1" once. An HTML form radio button is handled in a same manner as a selection described above, as the user must select only one item from several. (The radio button selected indicates the selection and excludes the other selections unless changed). The user can select one or more HTML form check boxes from a group. The voice browser uses the descriptive label to ask, in sequence, whether the user wishes to select the item.

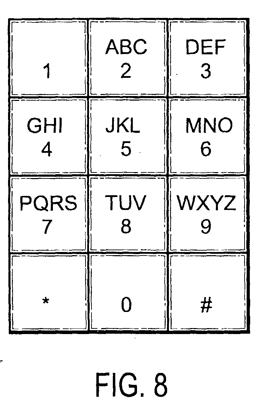

HTML forms may provide two buttons to submit and reset the status of the form data. The voice browser 302 also permits the user either to speak these commands or to press the designated DTMF keys. An HTML form text area, or text box, serves for the input and editing of alphanumeric text. Many telephones have a keypad that is augmented with the letters of the alphabet, as illustratively shown in FIG. 8, for example. The voice browser 302 announces the presence of the text field and the descriptive label. Making use of keypad, the user can then enter a string of alphanumeric characters. A letter is selected using a two key sequence; the first key press narrows the selection to the 3 or 4 letters on a specific key and the second key press identifies the position of the letter on the key. For example, the letter "E" would be chosen by pressing the combination "3" then "2". Numbers may be entered by enclosing the digits between sentinels. Additional keys are mapped to the "space" character and the delete or backspace function.

In addition to keypad input into a text area, speech-driven alphanumeric entry is also supported. Dictation style speech recognition may be employed over the telephone, or "command and control" speech recognition may also be employed. For "command and control" speech recognition, the user spells each character to the voice browser to support input into the text field using a "command and control" speech recognition grammar. However, spelling individual characters can lead to poor recognition rates, as some letters sound very similar, e.g., *m* and *n*, b and d. Further study showed which letters the speech recognition engine confused due to similar sound. The voice browser was subsequently enhanced by adding predefined lists of similar sounding letters. The user speaks a letter, e.g., *"b",* the speech recognition engine guesses *"d"* and the voice browser provides confirmation by speaking "*d*". The user then says "wrong" and the voice browser then announces from a predefined list the letters that sound like "*d*". The user then interrupts when the voice browser announces "*b*" to select it. While this approach has merit, embracing the phonetic alphabet (e.g., Alpha, Bravo, Charlie, etc.) affords increased disambiguation for the speech recognition engine.

A personal profile allows the user to associate macro commands to specific data. For example, common fields such as name, address, credit card number, etc., may be mapped to speech recognition phrases to provide a more efficient and less error-prone approach to the input of high frequency data.

When the user has completed input into each field of the form, the voice browser offers the opportunity to review the form content in block 312. Once satisfied, the voice browser 302 encodes the form data according to the specification and submits it to an originating WWW server in block 314.

Having described preferred embodiments for system and method for analysis, description and voice-driven interactive input to HTML forms (which are intended to be illustrative and not limiting), it is noted that modifications and variations can be made by persons skilled in the art in light of the above teachings. It is therefore to be understood that changes may be made in the particular embodiments of the invention disclosed which are within the scope and spirit of the invention as outlined by the appended claims. Having thus described the invention with the details and particularity required by the patent laws, what is claimed and desired protected by Letters Patent is set forth in the appended claims.

## Claims

1. A method for analyzing and describing structured documents for audibly rendering forms for user interaction comprising the steps of:
presenting a structured document;
analyzing the structured document to identify the presence of at least one form, the at least one form including at least one input element;
marking the input elements with descriptive tags; and
audibly presenting the descriptive tags to a user to enable the user to make selections and enter data for the input elements in the form.

2. The method as recited in claim 1, wherein the step of presenting a structured document includes the step of presenting a hypertext markup language document.

3. The method as recited in claim 1, wherein the step of marking the elements with descriptive tags includes the steps of:
if an input element is found, labeling the input element and describing the input element in accordance with text associated with the input element in the form.

4. The method as recited in claim 3, wherein the input elements include one or more of a select list, a radio button, a check box, a text area, and a button.

5. The method as recited in claim 3, wherein the step of describing the input element in accordance with text associated with the input element in the form includes the step of describing the input element in accordance with text associated with the input element in accordance with criteria for determining the associated text.

6. The method as recited in claim 4, wherein the criteria includes a most likely placement position for the associated text.

7. The method as recited in claim 1, wherein the step of audibly presenting the descriptive tags to a user includes the step of audibly presenting the descriptive tags by employing a voice synthesizer to audibly render the descriptive tags in a context of the form.

8. A method for analyzing and describing structured documents on the Internet for audibly rendering forms for user interaction comprising the steps of:
downloading a structured document from the Internet;
analyzing the structured document to identify the presence of at least one form, the at least one form including input elements;
marking the input elements with descriptive tags;
audibly presenting the descriptive tags to a user to enable the user to make selections and enter data for the input elements in the form;
associating a user response to a particular input selection or data entry value to provide input for the input elements of the form; and
submitting the form in a completed state.

9. The method as recited in claim 8, wherein the structured document includes a hypertext markup language document.

10. The method as recited in claim 8, wherein the step of marking the elements with descriptive tags includes the steps of:
if an input element is found, labeling the input element and describing the input element in accordance with text associated with the input element in the form.

11. The method as recited in claim 10, wherein the input elements include one or more of a select list, a radio button, a check box, a text area, and a button.

12. The method as recited in claim 10, wherein the step of describing the input element in accordance with text associated with the input element in the form includes the step of describing the input element in accordance with text associated with the input element in accordance with criteria for determining the associated text.

13. The method as recited in claim 12, wherein the criteria includes a most likely placement position for the associated text.

14. The method as recited in claim 8, wherein the step of audibly presenting the descriptive tags to a user includes the step of audibly presenting the descriptive tags by employing a voice synthesizer to audibly render the descriptive tags in a context of the form.

15. The method as recited in claim 8, wherein the user response includes speech and the step of associating a user response to a particular input selection or data entry value includes the step of associating user speech with a particular input selection or data entry value.

16. The method as recited in claim 8, wherein the user response includes a digital tone multiple frequency (DTMF) signal and the step of associating a user response to a particular input selection or data entry value includes the step of associating a DTMF signal with a particular input selection or data entry value.

17. A program storage device readable by machine, tangibly embodying a program of instructions executable by the machine to perform method steps for analyzing and describing structured documents for audibly rendering forms for user interaction, the method steps comprising:
providing a structured document;
analyzing the structured document to identify the presence of at least one form, the at least one form including at least one input element;
marking the input elements with descriptive tags; and
presenting the descriptive tags for audible rendering to a user to enable the user to make selections and enter data for the input elements in the form.

18. The program storage device as recited in claim 17, wherein the structured document includes a hypertext markup language document.

19. The program storage device as recited in claim 17, wherein the step of marking the elements with descriptive tags includes the steps of:
if an input element is found, labeling the input element and describing the input element in accordance with text associated with the input element in the form.

20. The program storage device as recited in claim 19, wherein the input elements include one or more of a select list, a radio button, a check box, a text area, and a button.

21. The program storage device as recited in claim 19, wherein the step of describing the input element in accordance with text associated with the input element in the form includes the step of describing the input element in accordance with text associated with the input element in accordance with criteria for determining the associated text.

22. The program storage device as recited in claim 21, wherein the criteria includes a most likely placement position for the associated text.

23. The program storage device as recited in claim 17, wherein the program storage device is part of a system, the system further comprising:
a voice synthesizer coupled to the program storage device for receiving and audibly rendering the descriptive tags to a user to enable the user to make selections and enter data for the input elements in the form.

24. The program storage device as recited in claim 23, wherein the system includes a portable communications device.

25. The program storage device as recited in claim 17, further comprising the steps of:
associating a user response to a particular input selection or data entry value to provide input for the input elements of the form; and
submitting the form in a completed state.

26. The program storage device as recited in claim 25, wherein the user response includes speech and the step of associating a user response to a particular input selection or data entry value includes the step of associating recognized speech of the user with a particular input selection or data entry value.

27. The program storage device as recited in claim 25, wherein the user response includes a digital tone multiple frequency (DTMF) signal and the step of associating a user response to a particular input selection or data entry value includes the step of associating a DTMF signal with a particular input selection or data entry value.

28. The program storage device as recited in claim 17, wherein the program storage device is part of a system, the system further comprising:
a speech recognition engine coupled to the program storage device for recognizing speech to enable the user to make selections and enter data for the input elements in the form.
